# EUROPEAN PATENT SPECIFICATION

(11) **EP 2 335 819 B1**
(45) Date of publication and mention of the grant of the patent: **10.07.2013**
(21) Application number: 09816010.4
(22) Date of filing: 19.08.2009
(51) Int. Cl.: B01J 19/12, F21V 29/02, H01L 33/00, B05C 9/12

(54) **LIGHT SOURCE DEVICE**
LICHTQUELLENVORRICHTUNG
DISPOSITIF DE SOURCE LUMINEUSE

(30) Priority: 26.09.2008 JP 2008248765
(43) Date of publication of application: 22.06.2011
(73) Proprietor: Hamamatsu Photonics K.K., Hamamatsu-shi, Shizuoka 435-8558 (JP)
(72) Inventor: YOKOYAMA Hideaki, Hamamatsu-shi Shizuoka 435-8558 (JP); OTA Akizo, Hamamatsu-shi Shizuoka 435-8558 (JP)
(74) Representative: Grünecker, Kinkeldey, Stockmair & Schwanhäusser
(86) International application number: PCT/JP2009/064527
(87) International publication number: WO 2010/035593

(56) References cited:
- JP-A- 2005 347 409
- JP-A- 2007 245 102

## Description

### Technical Field

The present invention relates to a light source apparatus including a plurality of light-emitting elements.

### Background Art

As a light source apparatus for irradiating light such as ultraviolet rays, there is provided, for example, a resin curing device described in Patent Document 1. This resin curing device comprises an LED array consisting of a plurality of LED elements, and ultraviolet rays emitted from this LED array are condensed by a single lens. Further, the ultraviolet rays condensed by the single lens are irradiated to the outside of the resin curing device via a light guide. Further, this resin curing device also comprises a cooling fan for forcibly cooling the LED array.

Moreover, Patent Document 2 describes an ultraviolet irradiation device including an LED. This ultraviolet irradiation device is provided with an air channel behind the LED, and cools the LED by making a cooling gas circulate through this air channel. In addition, wiring for supplying power to the LED is connected to a binding terminal outside the air channel.

### Citation List

### Patent Document

JP 2005 347409 A relates to a light projector, JP 2007 245102 A relates to an ultraviolet irradiation device.

Patent Document 1: Japanese Patent Application Laid-Open No. 2001-314424
Patent Document 2: Japanese Patent Application Laid-Open No. 2007-245102

### Disclosure of the Invention

### Problems that the Invention is to Solve

The present inventors have examined conventional light source apparatuses, and as a result, have discovered the following problems. That is, when a plurality of semiconductor light-emitting elements (hereinafter, simply referred to as light-emitting elements) are driven within a case, heat generated in the respective light-emitting elements are accumulated in the case. Accordingly, the case itself results in high temperature, which becomes one of the causes for deteriorating light emitting characteristics of the respective light-emitting elements. In order to solve such problems, for example, the invention described in Patent Literature 1 cools the light-emitting elements by use of the cooling fan. However, if there are a large number of light-emitting elements and the amount of heat generation per light-emitting element is large, a sufficient cooling capacity cannot be obtained with the cooling fan in some cases.

On the other hand, when there are a large number of light-emitting elements and the amount of heat generation per light-emitting element is large as in the above, a system for blowing a cooling gas to the respective light-emitting elements or the case containing the respective light-emitting elements is effective. However, since the case containing a plurality of light-emitting elements is larger in volume than that containing a single light-emitting element, the cooling effect of a cooling gas is biased if the cooling gas is locally blown, and it becomes difficult to uniformly cool all light-emitting elements.

The present invention has been developed to eliminate the problems described above. It is an object of the present invention to provide a light source apparatus having a structure for improving the uniformity of the cooling effect on a plurality of light-emitting elements prepared as light sources.

### Means for Solving the Problems

In order to solve the above problems, a light source apparatus according to the present invention comprises a plurality of light emitting elements, a first case, a heat conducting structure, a plurality of conductive wires, a circuit board, and a second case provided with an inlet and an outlet for a cooling medium.

The first case has a space for storing each of the light-emitting elements. Moreover, the light emitting elements are preferably two-dimensionally arranged on an identical surface so that their respective beam irradiation directions are coincident in order to reduce an unevenness in light emission of said light source apparatus. The heat conducting structure holds each of the light-emitting elements at a predetermined position in the first case, and enables heat transfer between each of the light-emitting elements and the first case. The conductive wires are provided corresponding to each of the light-emitting elements, and each of the conductive wires has one end electrically connected to the associated one of the light-emitting elements and the other end led out of the first case, and to the circuit board, the other ends of these conductive wires are electrically connected. The second case has an internal space for storing the circuit board. Moreover, the second case has an introduction opening for introducing the circuit board into the inner space, and is fixed to the first case so that the introduction opening is blocked by one surface of the first case. The inlet is, for introducing a gas (cooling medium) for cooling the first case to the inside of the internal space of the second case, provided in a predetermined region of the second case excluding an opening end that defines the introduction opening. Similarly, the outlet is, for discharging the gas introduced to the inside of the internal space of the second case, provided in the predetermined region of the second case excluding an opening end that defines the introduction opening.

In the light source apparatus having such a structure as in the above, a cooling gas is introduced from the inlet formed in the predetermined region of the second case. This cooling gas is introduced to the inside of the internal space of the second case, and blown to the one surface of the first case that blocks the introduction opening of the second case. Thereafter, the cooling gas circulates by convection within the internal space of the second case, and is then discharged from the outlet formed in the predetermined region of the second case.

Here, inside the internal space of the second case, the circuit board is arranged. The circuit board serves, for example, the role of consolidating the power supply wiring separated into a plurality of conductive wirings. Moreover, the circuit board is preferably held separated by a predetermined distance from the one surface of the first case defining the internal space of the second case by blocking the introduction opening of the second case and an inner wall surface of the second case. In particular, the light source apparatus according to the present invention may include a holding structure for holding the circuit board in such a state. By this configuration, the cooling gas introduced to the inside of the internal space of the second case is stirred by the circuit board, and flows along the one surface (surface that blocks the introduction opening of the second case) of the first case, and thus uniformly spreads all over the one surface of the first case. Consequently, by said light source apparatus, the uniformity of the cooling effect on the light-emitting elements can be improved.

In the light source apparatus according to the present invention, the first case preferably has a plurality of through-holes each corresponding to one of the light-emitting elements and arranged mutually separated by a predetermined distance. In such a configuration, the associated one of the light-emitting elements is stored in a space defined by an inner wall of the through-holes.

Moreover, in the light source apparatus according to the present invention, the first case is preferably comprised of a metal material in order to allow efficient heat conduction. Moreover, the heat conducting structure may include a plurality of heat conductors provided corresponding to the light-emitting elements.

Moreover, in the light source apparatus according to the present invention, the inlet and the outlet may be arranged on one surface of the second case opposed to an opening end defining the introduction opening. In the configuration that the inlet and the outlet are thus arranged on an identical surface (one surface of the second case), when the one surface of the second case is viewed along a direction from the one surface of the second case toward the one surface of the first case, the circuit board preferably has a shape not overlapping the inlet and the outlet.

Moreover, in the configuration that the inlet and the outlet are thus arranged on an identical surface (one surface of the second case), when the one surface of the second case is viewed along a direction from the one surface of the second case toward the one surface of the first case, the inlet and the outlet are preferably arranged at positions separated on the one surface of the second case, and the circuit board is preferably arranged so that a segment indicating a minimum width of the circuit board becomes coincident or parallel with a straight line passing through a center of the inlet and a center of the outlet.

Further, in the configuration that the inlet and the outlet are thus arranged on an identical surface (one surface of the second case), when the one surface of the second case is viewed along a direction from the one surface of the second case toward the one surface of the first case, the one surface of the second case has a rectangular shape, the inlet and the outlet are preferably provided separated in a diagonal direction of the one surface of the second case. In addition, the circuit board preferably has a planar shape that is similar to the one surface of the second case, and for which corner portions in the diagonal direction where the inlet and the outlet are located have been cut away.

Due to any of the above configurations in terms of the arrangement of the inlet and the outlet, and the shape of the circuit board or due to a combination of the above configuration, the cooling gas can smoothly flow without being interrupted by the presence of the circuit board, and thus the cooling effect on the light-emitting elements can be further improved.

Moreover, the light source apparatus according to the present invention may further include a wiring connector to be attached to one surface of the second case (surface opposed to the introduction opening). Also, in this case, the circuit board is supported in the internal space of the second case by the wiring connector. By this configuration, since it is not necessary to separately provide a member for supporting the circuit board in said internal space, the cooling gas can be smoothly circulated by convection within the internal space.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will be apparent to those skilled in the art from this detailed description.

### Effects of the Invention

In accordance with the light source apparatus according to the present invention, it becomes possible to improve the uniformity of the cooling effect on a plurality of light-emitting elements each of which functions as a light source.

### Brief Description of the Drawings

Fig. 1 is a perspective view showing an embodiment of a light source apparatus according to the present invention;
Fig. 2 is a perspective view showing a state of the light source apparatus shown in Fig. 1, with lens hoods removed;
Fig. 3 is a side view showing the light source apparatus shown in Fig. 1;
Fig. 4 is a cut-away side view showing a partial internal structure of the light source apparatus shown in Fig. 1;
Fig. 5 is a perspective view showing a configuration of an ultraviolet LED as a semiconductor light-emitting element;
Fig. 6 is an exploded perspective view for explaining a structure of a light-emitting unit including the ultraviolet LED shown in Fig. 5;
Fig. 7 is a perspective view for more concretely explaining a thermal coupling structure of an ultraviolet LED and a heat conductor;
Fig. 8 is a partially enlarged perspective view for explaining a state of a light-emitting unit being inserted and fixed to a through-hole of a front case (part 1);
Fig. 9 is a partially enlarged perspective view for explaining a state of a light-emitting unit being inserted and fixed to a through-hole of a front case (part 2);
Fig. 10 shows an exploded perspective view and a side sectional view showing in detail the structure of a lens hood and lenses;
Fig. 11 is an exploded perspective view of the light source apparatus when viewed from the upper right and obliquely behind, with a part of the internal structure of the light source apparatus to be stored in a rear case exposed;
Fig. 12 is an exploded perspective view of the light source apparatus when viewed from the lower right and obliquely behind, with a part of the internal structure of the light source apparatus to be stored in a rear case exposed;
Fig. 13 is an exploded perspective view of the light source apparatus when viewed from the upper right and obliquely front, with a part of the internal structure of the light source apparatus to be stored in a rear case exposed;
Fig. 14 is an exploded perspective view of the light source apparatus when viewed from the lower right and obliquely front, with a part of the internal structure of the light source apparatus to be stored in a rear case exposed;
Fig. 15 is an exploded perspective view of the light source apparatus when viewed from above, with a part of the internal structure of the light source apparatus to be stored in a rear case exposed;
Fig. 16 is a graph showing changes in the temperature of the front case in an embodiment of a light source apparatus according to the present invention;
Fig. 17 is a graph showing changes in the temperature of the front case when no air cooling is performed by way of comparison; and
Fig. 18 shows a front view (view from the front surface side of the rear case) showing the arrangement between a rear case and a circuit board as a modification of the light source apparatus according to the present embodiment.

### Best Modes for Carrying Out the Invention

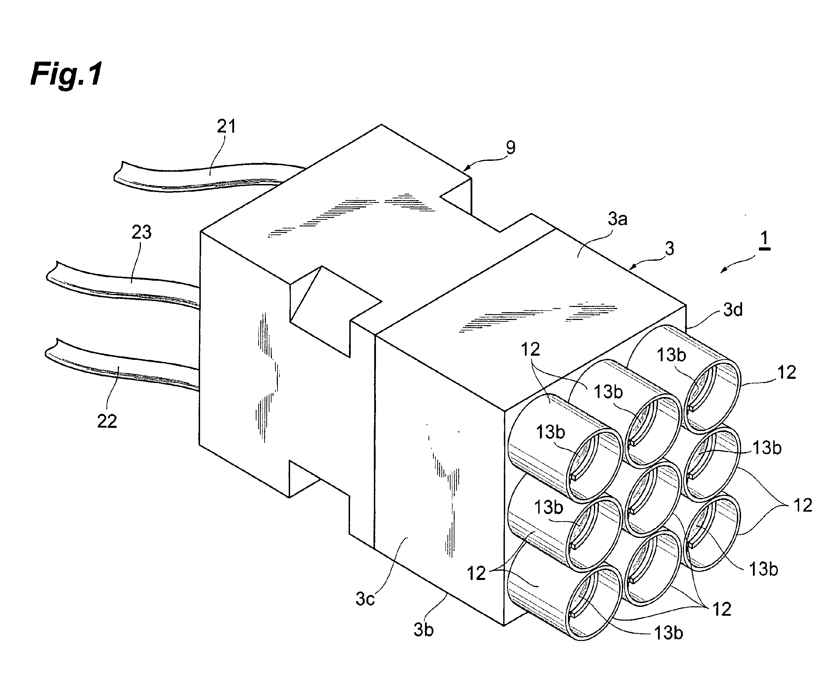

In the following, embodiments of a light source apparatus according to the present invention will be described in detail with reference to the Fig. 1 to Fig. 18. In the description of the drawings, identical or corresponding components are designated by the same reference numerals, and overlapping description is omitted.

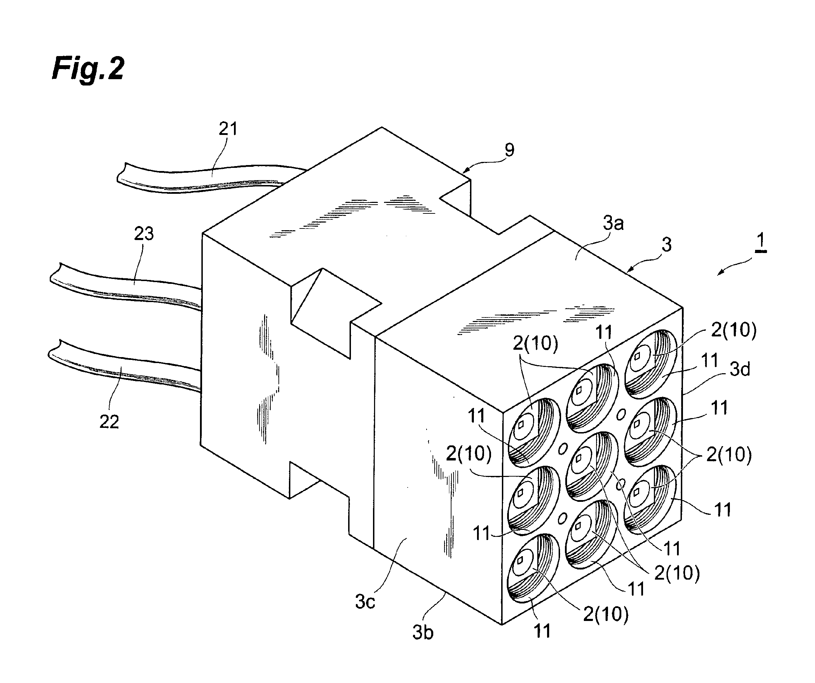

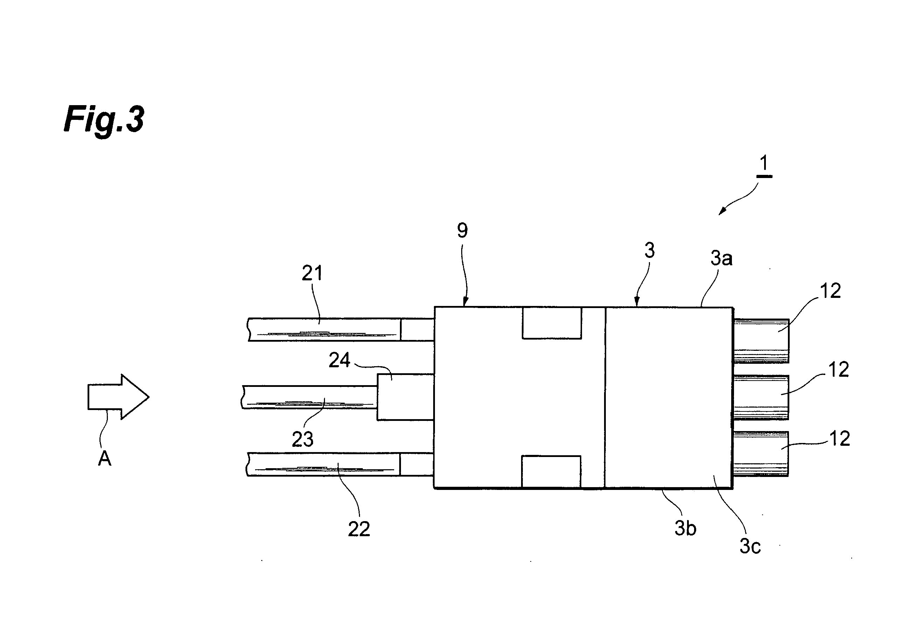

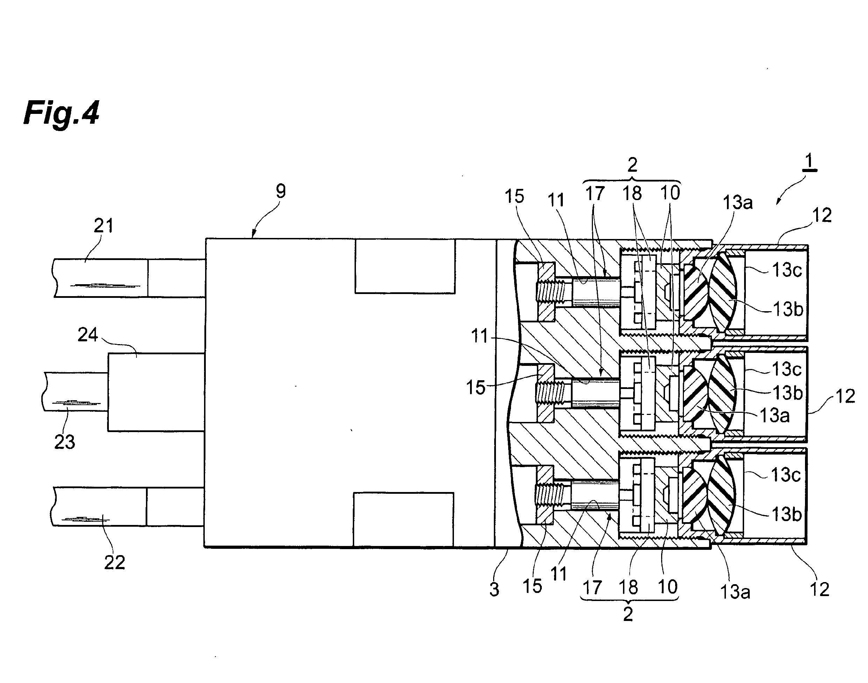

Fig. 1 is a perspective view showing an embodiment of a light source apparatus according to the present invention. Fig. 2 is a perspective view showing a state of the light source apparatus shown in Fig. 1, with lens hoods 12 removed. Fig. 3 is a side view showing the light source apparatus shown in Fig. 1. Fig. 4 is a cut-away side view showing a partial internal structure of the light source apparatus shown in Fig. 1. The light source apparatus 1 according to the present embodiment is, for example, an ultraviolet irradiation device (spot light source) for irradiating ultraviolet rays (UV) condensed into spots to an object, and used for bonding of an optical communication component, bonding of an optical pick-up component, bonding of a magnetic head, bonding of a CCD, fixation of an electronic component, hardening of a fiber cladding, sealing of liquid crystals, fixation of a coil winding, drying of a UV ink, a UV exciting light source, a high-intensity ultraviolet irradiation experiment, and the like.

The light source apparatus 1 according to the present embodiment shown in Fig. 1 to Fig. 4 includes a plurality of light-emitting units 2 (refer to Fig. 2 and Fig. 4) each having a light-emitting element, a front case 3 (first case) containing the light-emitting units 2, and a rear case 9 (second case) attached to the rear of the front case 3.

The front case 3 is a block-shaped metal member. This front case 3 has a pair of mutually opposing flat surfaces 3a, 3b, and another pair of flat surfaces 3c, 3d extending vertically with respect to the surfaces 3a, 3b, and substantially rectangular parallelepiped in its shape. In the front case 3, as shown in Fig. 2 and Fig. 4, nine through-holes 11 corresponding to the light-emitting units 2, respectively, are formed. In each of the through-holes 11, the associated light-emitting unit 2 is stored. These nine through-holes 11 extend along a direction (through direction) parallel to the surfaces 3a to 3d. In the present embodiment, through-holes 11 are formed arranged vertically in three columns and horizontally in three rows in a direction orthogonal to the through direction. In addition, the respective through-holes 11 are separated from each other by a predetermined distance so that the light-emitting element included in the associated light-emitting unit 2 does not receive the effect of heat generation of the light-emitting elements stored in the adjacent separate through-holes 11.

In each of the through-holes 11, the associated light-emitting unit 2 is fixed in an inserted state, but the respective light-emitting units 2 are freely attachable and detachable with respect to the through-holes 11 into which the light-emitting units 2 have been inserted. Each of the light-emitting units 2 has, as shown in Fig. 4, a heat conductor 17 extending along the through direction of the through-hole 11, and an ultraviolet LED 10 being a light-emitting element that is fixed to one end of the heat conductor 17 to be thermally coupled with the heat conductor 17. Thus, each of the heat conductors 17 forms a part of the heat conducting structure that holds the associated ultraviolet LED 10, while enabling heat transfer between the associated ultraviolet LED 10 and the front case 3.

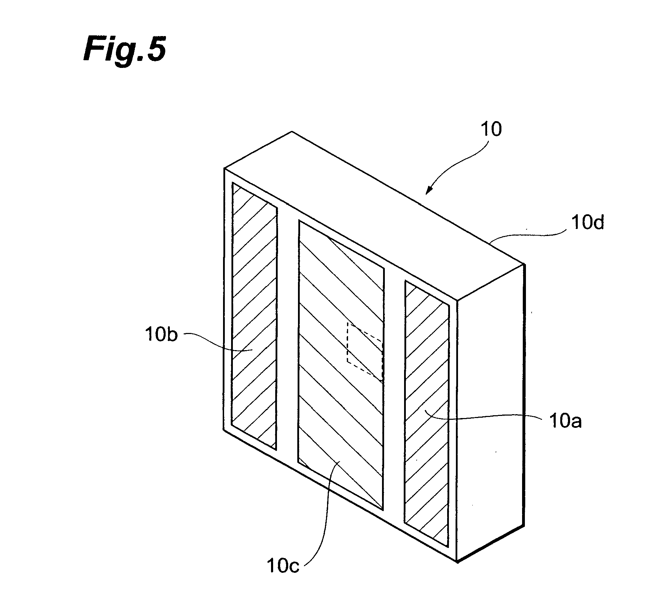

The ultraviolet LED 10 is an ultraviolet-light emission chip type light-emitting element, and emits high-power ultraviolet rays. Fig. 5 is a perspective view showing a configuration of the ultraviolet LED 10 in the present embodiment. As shown in Fig. 5, at both ends of a back surface (surface on the opposite side to a light emitting surface 10d) of the ultraviolet LED 10, a cathode terminal 10a and an anode terminal 10b extending in parallel are provided. Moreover, between the cathode terminal 10a and the anode terminal 10b on the back surface of the ultraviolet LED 10, a rectangular heat radiation surface 10c is provided. More specifically, since this high-power ultraviolet LED 10 generates a large amount of heat, the metallic heat radiation surface 10c is provided on the back surface of the ultraviolet LED 10 in order to prevent a decrease in the power and a reduction in the lifetime of the ultraviolet LED 10.

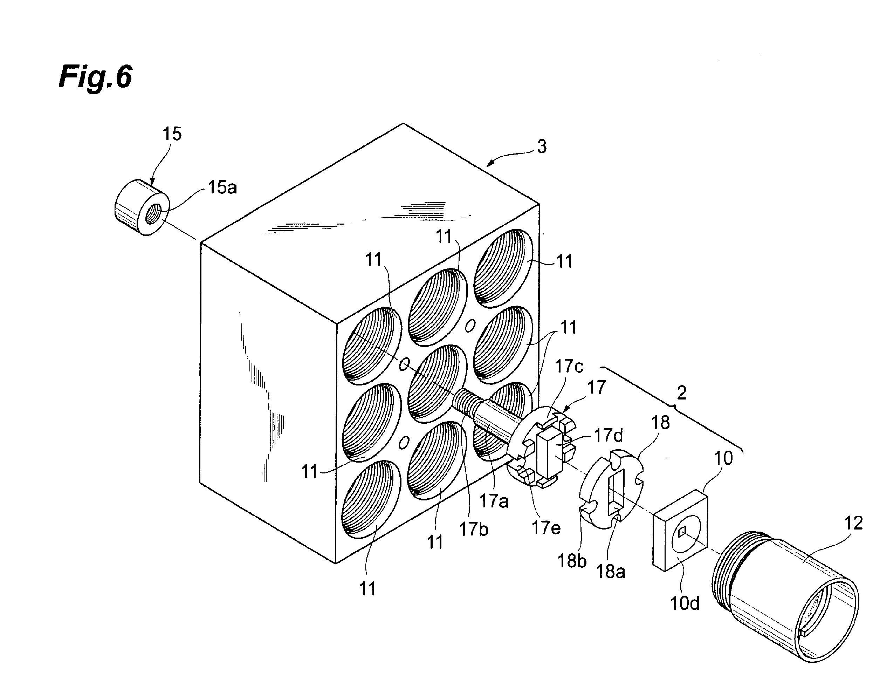

Fig. 6 is an exploded perspective view for explaining a structure of the light-emitting unit 2 in detail. As shown in Fig. 6, the heat conductor 17 includes a coupling portion 17d whose end face is thermally coupled to the ultraviolet LED 10 across a pedestal portion 17c that contributes to positioning of the heat conductor 17, and a projecting part 17a extending from the coupling portion 17d along a predetermined direction so as to be away from the ultraviolet LED 10 being a heating element. Moreover, at a tip of the projecting part 17a, a male screw portion 17b for freely attachably and detachably fixing the heat conductor 17 with respect to the front case 3, and at a side surface of the pedestal portion 17c, a U-groove 17e for positioning a conductive wire is formed. The heat conductor 17 inserted in the through-hole 11 is, as a result of its projecting part 17a being screwed by a nut 15 (a female screw portion 15a is formed at an inner side surface thereof), fixed to the front case 3. The heat conductor 17 is comprised of, for example, copper, a copper alloy, or a metal material obtained by plating those.

Between the heat conductor 17 and the ultraviolet LED 10, an insulating substrate 18 formed on a front surface thereof with an electrical wiring pattern is arranged in order to supply electricity to the cathode terminal 10a and the anode terminal 10b (refer to Fig. 5) of the ultraviolet LED 10. This insulating substrate 18 has an opening 18a for passing therethrough the coupling portion 17d of the heat conductor 17, and has a U-groove 18b for positioning a conductive wire formed at a side surface thereof.

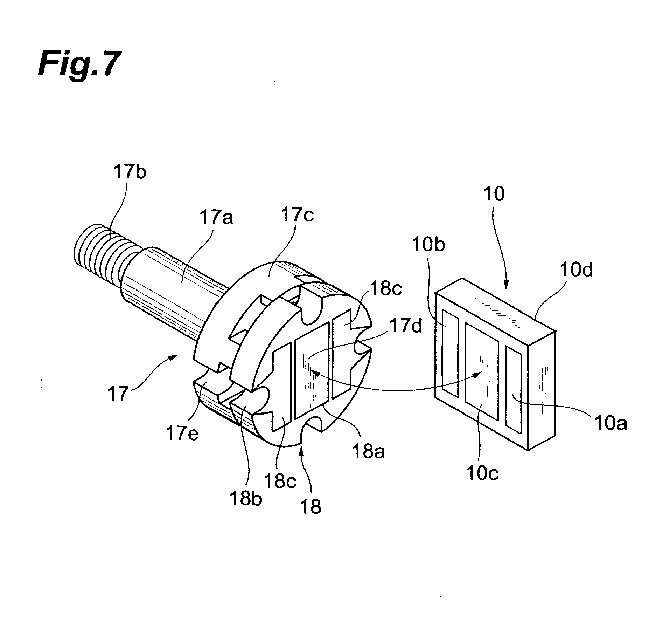

Fig. 7 is a perspective view for more concretely explaining the thermal coupling structure of the ultraviolet LED 10 and the heat conductor 17. As shown in Fig. 7, the insulating substrate 18 is, with the coupling portion 17d of the heat conductor 17 inserted in the opening 18a of the insulating substrate 18, mounted on the pedestal portion 17c of the heat conductor 17. The U-groove 17e provided at the side surface of the pedestal portion 17c and the U-groove 18b provided at the side surface of the insulating substrate 18 are coincident, and a conducive line is positioned by these U-grooves 17e, 18b. The end face of the coupling portion 17d of the heat conductor 17 is exposed from the opening 18a of the insulating substrate 18, and as a result of this end face of the coupling portion 17d and the heat irradiation surface 10c of the ultraviolet LED 10 being coupled by soldering, the heat conductor 17 and the ultraviolet LED 10 are thermally coupled. In addition, the soldering between the end face of the coupling portion 17d and the heat radiation surface 10c of the ultraviolet LED 10 is performed, using a cream solder or the like, by directly or indirectly raising the temperature of a part applied with the cream solder to a melting temperature of the cream solder.

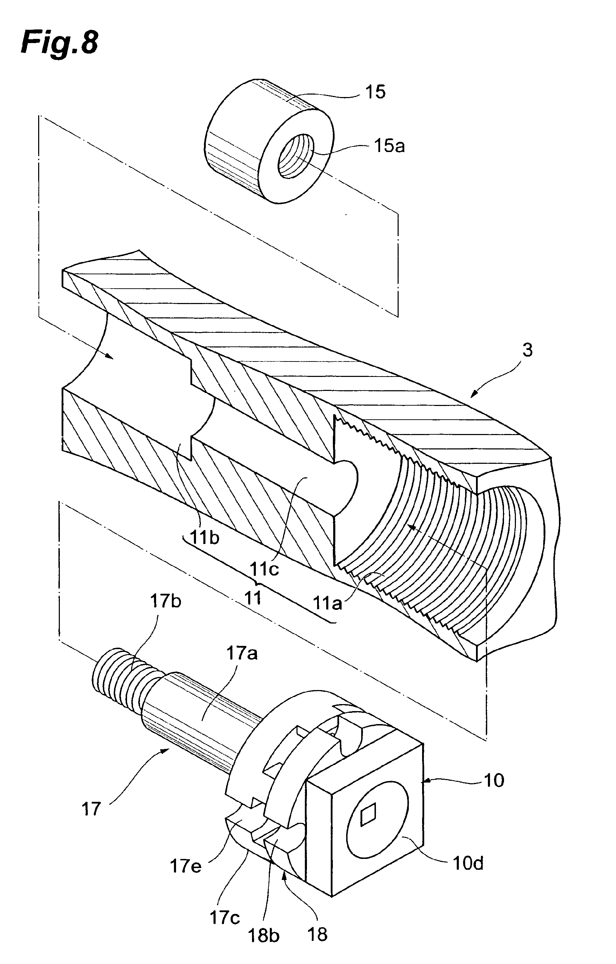

Fig. 8 is a partially enlarged perspective view for explaining a state of the light-emitting unit 2 being inserted and fixed to the through-hole 11 of the front case 3. The light-emitting unit 2 is inserted at the heat conductor 17 thereof through the through-hole 11 of the front case 3, and fixed to the front case 3. The through-hole 11 includes a first part 11a, a second part 11b, and a third part 11c. The first part 11a is formed at the front of the front case 3, and the second part 11b is formed at the rear of the front case 3. The third part 11c is formed, so as to connect the first part 11a and the second part 11b with each other, between the first part 11a and the second part 11b. Moreover, the inner diameter of the third part 11c is smaller than the inner diameters of the first and second portions 11a, 11b. The ultraviolet LED 10, the insulating substrate 18, and the heat conductor 17 excluding the projecting part 17a of the light-emitting unit 2 are inserted in the first part 11a of the through-hole 11, and the projecting part 17a of the heat conductor 17 is inserted in the third part 11c of the through-hole 11. The nut 15 is inserted in the second part 11b of the through-hole 11, and the male screw portion 17b formed at a tip portion of the projecting part 17a and the female screw portion 15a formed at an inner wall of the nut 15 are screwed together. By this configuration, the light-emitting unit 2 is freely attachably and detachably fixed to the front case 3.

Moreover, the projecting part 17a of the heat conductor 17 and the front case 3 are thermally coupled via an inner wall of the through-hole 11. The front case 3 is comprised of a metal having a lower thermal conductivity than that of the heat conductor 17, for example, aluminum. The front case 3 functions as a heat radiation member for radiating heat transferred from the heat conductor 17 to the outside of the light source apparatus 1. In addition, between the projecting part 17a of the heat conductor 17 and the inner wall of the third part 11c of the through-hole 11, a heat transfer material such as a heat conductive grease is preferably filled in order to enable effective heat transfer.

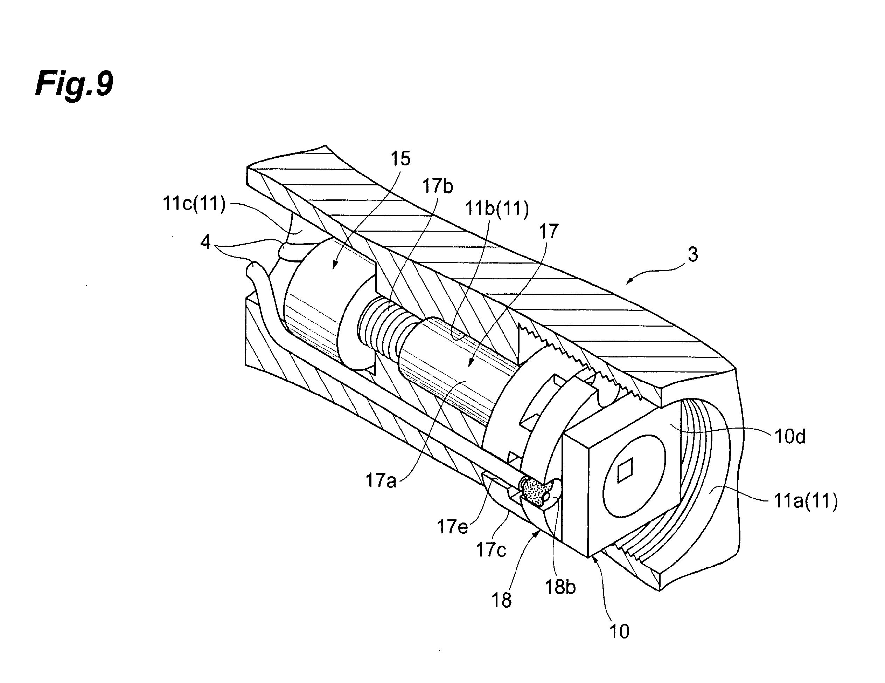

To the light-emitting unit 2 having the above configuration, a conductive wire for supplying electricity to the ultraviolet LED 10 is attached. Specifically, as shown in Fig. 9, one-side ends of two conductive wires (covered electric wires) 4 are inserted from a rear opening of the through-hole 11. The other-side ends of the conductive wires 4 are led out to the outside of the front case 3 from the through-hole 11. The conductive wires 4 are fixed fitted in the U-groove 17e provided at the side surface of the pedestal portion 17c of the heat conductor 17 and the U-groove 18b provided at the side surface of the insulating substrate 18. At this time, the one-side ends of the conductive wires 4 are soldered to a part of the electrical wiring pattern 18c (refer to Fig. 8) formed on the front surface of the insulating substrate 18, and electrically connected to the ultraviolet LED 10.

The light source apparatus 1, as shown in Fig. 4, further includes a plurality of lenses 13a, a plurality of lenses 13b, and a plurality of lens hoods 12. The lenses 13a are arranged opposed to the ultraviolet LEDs 10, respectively, and the lenses 13a and 13b are supported by the associated lens hoods 12 so as to be arranged side by side in an order of the lens 13a and the lens 13b in a light emitting direction of the ultraviolet LED 10. The lens hoods 12 are cylindrical members, inside of which the lenses 13a, 13b are fixed, and then one-side ends of which are fixed to the front case 3 so as to be individually freely attachable and detachable.

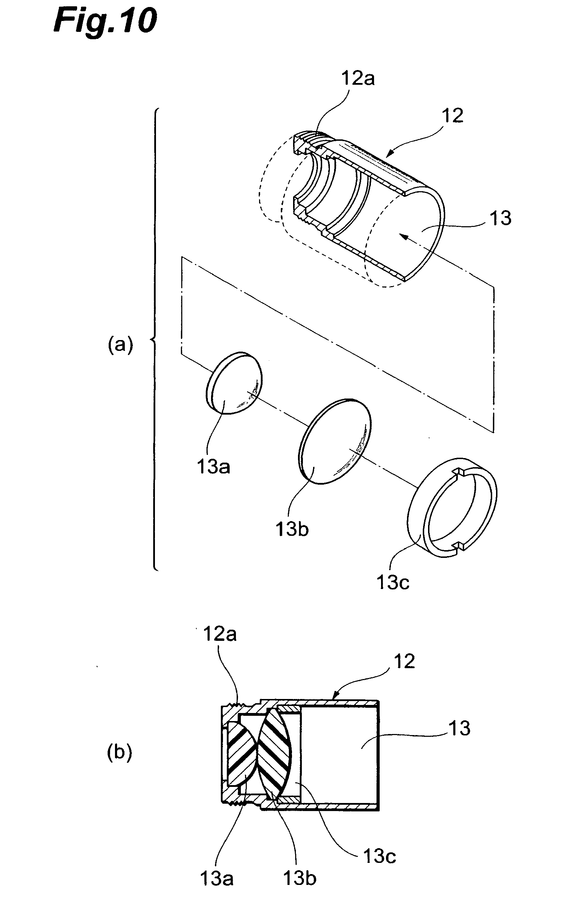

Fig. 10 shows views for explaining in detail the structure of the lens hood 12 and the lenses 13a, 13b. Particularly, in Fig. 10, the area (a) is an exploded perspective view, and the area (b) is a side sectional view. The lens hood 12 is provided with a through-hole 13 for storing a condensing optical system, and placed on a predetermined fixing portion after, as shown in the area (a) of Fig. 10, the lenses 13a, 13b constituting a condensing optical system are sequentially inserted in the through-hole 13 from the front opening thereof. Then, these lenses 13a, 13b are, as shown in the area (b) of Fig. 10, fixed to the inside of the lens hood 12 by a ring-shaped stopper 13c. A male screw portion 12a is formed at an outer peripheral surface of the lens hood 12, and as a result of this male screw portion 12a being screwed together with a female screw portion formed at an inner wall surface of the first part 11a (refer to Fig. 8) of the through-hole 11, the lens hood 12 with the lenses 13a, 13b fixed inside thereof is fixed freely attachably and detachably with respect to the front case 3.

The rear case 9 shown in Fig. 1 to Fig. 4 is a case for forcibly cooling the front case 3 by introducing a cooling medium (cooling gas) for cooling the front case 3 from the outside of said light source apparatus 1. At a rear surface of the rear case 9, a pipe 21 for introducing a cooling gas, and a pipe 22 for discharging the introduced cooling gas are attached, and the cooling gas is introduced and discharged into and from a hollow portion of the rear case 9 by gas introduction means and gas discharge means (not shown). Moreover, at the rear surface of the rear case 9, a cable 23 for supplying a power current to the ultraviolet LEDs 10 is connected via a plug 24 of a wiring connector.

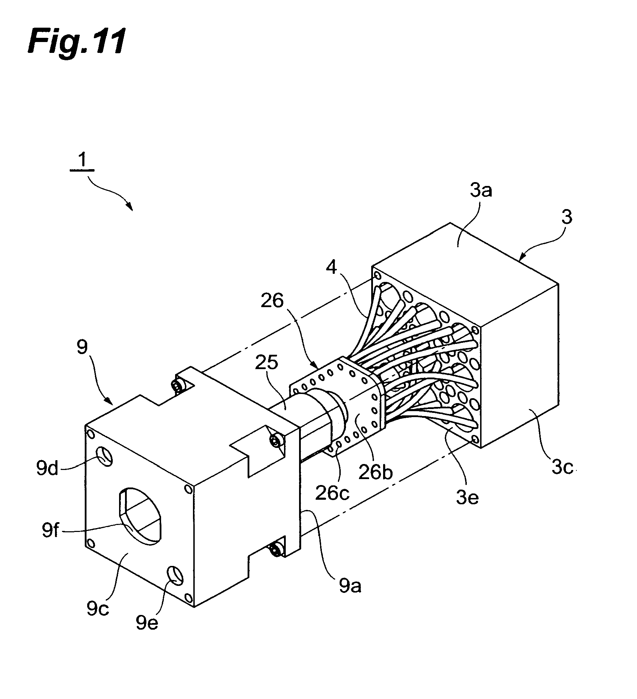

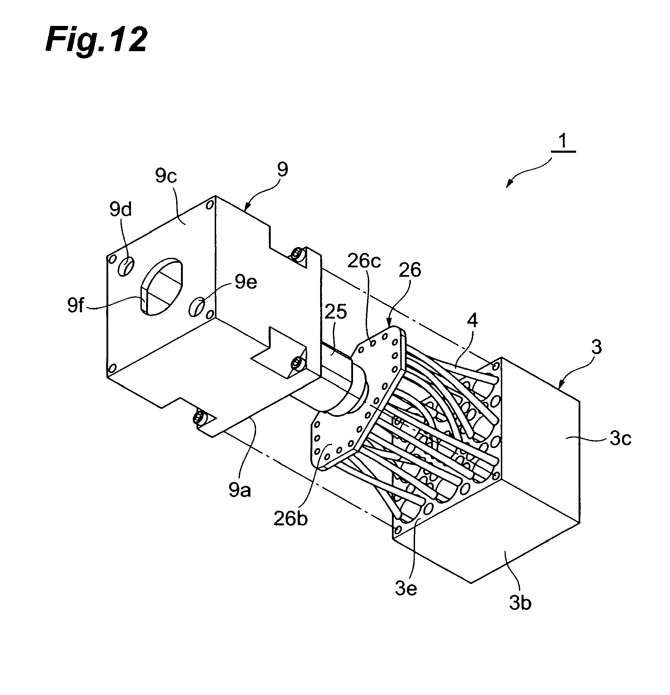

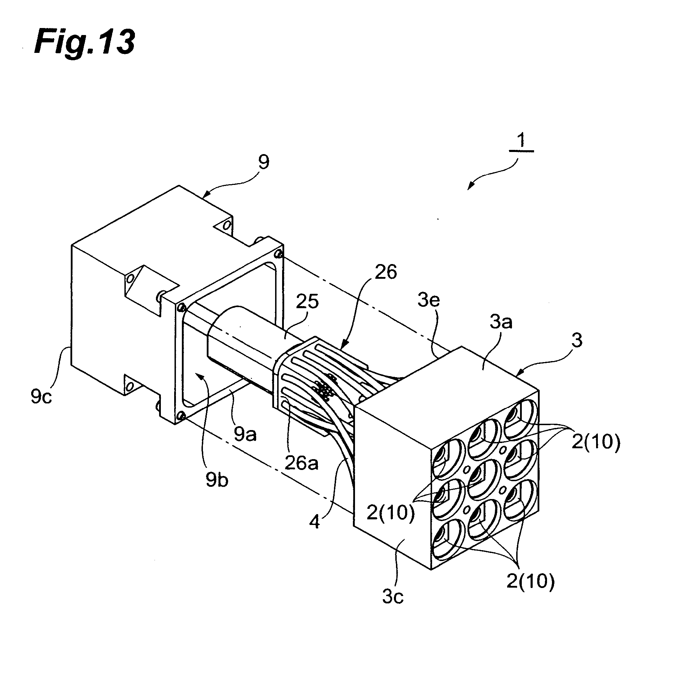

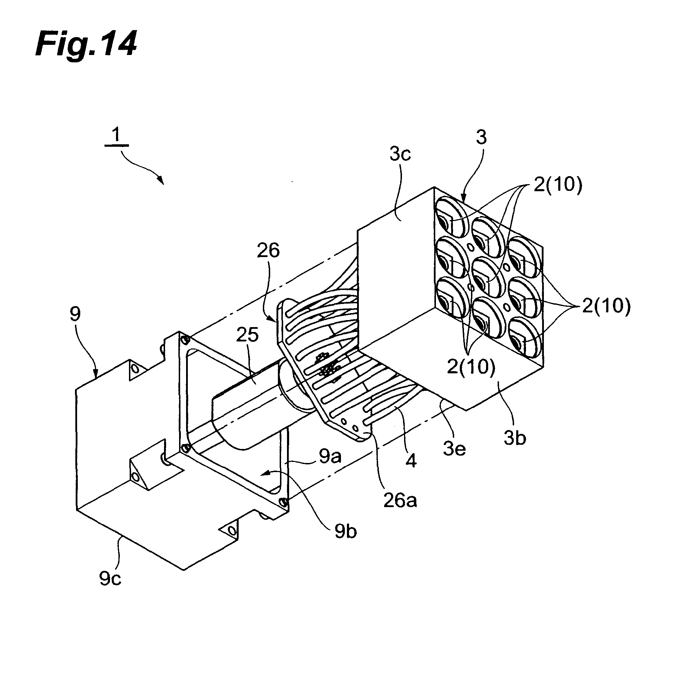

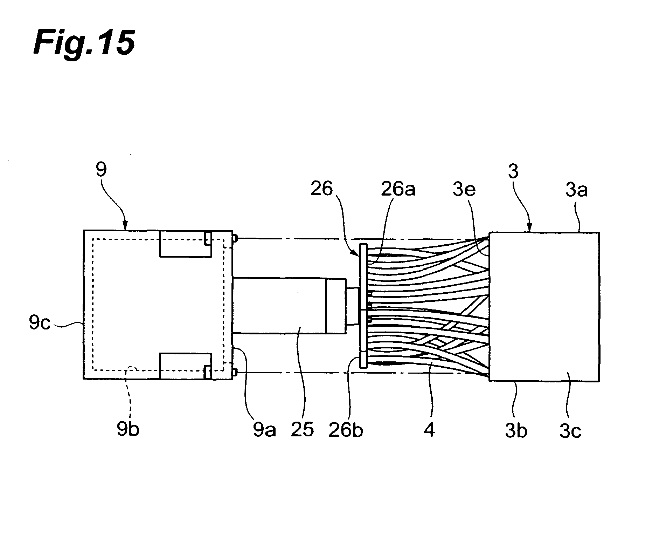

Here, Fig. 11 to Fig. 14 are exploded perspective views showing the light source apparatus 1 viewed from a variety of directions, with a partial internal structure of the light source apparatus 1 exposed. Specifically, Fig. 11 shows a partial internal structure of the light source apparatus 1 when viewed from the upper right and obliquely behind of the surface 3a (top surface) and the surface 3c (right side surface) of the front case 3 (a position where the top surface 3a and the right side surface 3c can be observed at the same time when said light source apparatus 1 is viewed from the rear case 9 side toward the front case 3 side), Fig. 12 shows a partial internal structure of the light source apparatus 1 when viewed from the lower right and obliquely behind of the surface 3b (bottom surface) and the surface 3c (right side surface) of the front case 3 (a position where the bottom surface 3b and the right side surface 3c can be observed at the same time when said light source apparatus 1 is viewed from the rear case 9 side toward the front case 3 side), Fig. 13 shows a partial internal structure of the light source apparatus 1 when viewed from the upper right and obliquely front of the surface 3a (top surface) and the surface 3c (right side surface) of the front case 3 (a position where the top surface 3a and the right side surface 3c can be observed at the same time when said light source apparatus 1 is viewed from the front case 3 side toward the rear case 9 side), and Fig. 14 shows a partial internal structure of the light source apparatus 1 when viewed from the lower right and obliquely front of the surface 3b (bottom surface) and the surface 3c (right side surface) of the front case 3 (a position where the bottom surface 3b and the right side surface 3c can be observed at the same time when said light source apparatus 1 is viewed from the front case 3 side toward the rear case 9 side). Further, Fig. 15 is an exploded side view of the light source apparatus 1 from the surface 3c (right side surface) side of the front case 3. In addition, the lens hoods 12 are omitted in Fig. 11 to Fig. 15.

As can be understood from Fig. 11 to Fig. 15, the rear case 9 is a hollow member having a substantially rectangular parallelepiped-shaped external appearance, and opened at one end face 9a (front surface) thereof. Then, the one end face 9a of the rear case 9 is fixed by screwing to one end face (rear surface 3e in the present embodiment) of the front case 3. As a result, an opening (introduction opening) at the front surface 9a of the rear case 9 is blocked by the rear surface 3e of the front case 3, so that in the rear case 9, an internal space 9b closed to the rear surface 3e side of the front case 3 is formed.

Moreover, in the other end face 9c (rear surface) opposed to the front surface 9a of the rear case 9, an inlet 9d for introducing a cooling gas to the inside of the internal space 9b, an outlet 9e for discharging the cooling gas from the inside of the internal space 9b, and a connector insertion hole 9f for inserting therethrough a receptacle 25 of a wiring connector to be described later are formed. In addition, the wiring connector is composed of the foregoing plug 24 and receptacle 25. The connector insertion hole 9f is formed near the center of the rectangular-shaped rear surface 9c, and the inlet 9d and the outlet 9e are respectively arranged separated in a diagonal direction of the rear surface 9c so as to sandwich the connector insertion hole 9f therebetween. In other words, the inlet 9d and the outlet 9e are formed near two corners located diagonally of the rear surface 9c, respectively. In addition, as can be understood from Fig. 11 and Fig. 12, the circular inlet 9d and outlet 9e are formed in the present embodiment, but the shape of the inlet 9d and the outlet 9e is not limited hereto.

The light source apparatus 1 according to the present embodiment includes, as shown in Fig. 11 to Fig. 15, a circuit board 26 and the receptacle 25 of the wiring connector. The circuit board 26 includes a printed circuit board, and bonded with the other-side ends of a large number of conductive wires 4 (refer to Fig. 9) led out of the light-emitting units 2 so as to have a conductive connection to the circuit board 26.

The circuit board 26 is arranged inside of the internal space 9b so that its front surface 26a is opposed to the back surface 3e of the front case 3, and its back surface 26b is opposed to the rear surface 9c of the rear case 9. Moreover, the circuit board 26 is arranged between the rear surface 3e of the front case 3 and the rear surface 9c of the rear case 9 spaced from each other. Specifically, the posture of the circuit board 26 is maintained so that the front surface 26a becomes substantially parallel to the rear surface 3e of the front case 3, and the back surface 26b becomes substantially parallel to the rear surface 9c of the rear case 9. In other words, the circuit board 26 is separated by a predetermined distance from the rear surface 3e of the front case 3 and an inner wall surface of the rear case 9 defining the internal space 9b of the rear case 9, while being held at a predetermined position in said internal space 9b.

Such a posture of the circuit board 26 is maintained by the receptacle 25 that forms a part of the wiring connector. More specifically, the receptacle 25 functions also as a holding structure to maintain the posture of the circuit board 26 in the space 9b of the rear case 9, and extends in a direction (front-back direction of the light source apparatus 1) orthogonal to the rear surface 9c of the rear case 9. Moreover, the receptacle 25 is, with its one end inserted through the connector insertion hole 9f formed in the rear surface 9c of the rear case 9, fixed to said rear surface 9c. The other end of the receptacle 25 is arranged on the back surface 26b of the circuit board 26, and a pin terminal projecting from the other end of the receptacle 25 is bonded so as to have a conductive connection to the circuit board 26 by a conductive adhesive. Accordingly, the circuit board 26 is fixed to the receptacle 25.

The other-side ends of the large number of conductive wires 4 led out of the light-emitting units 2 are arranged on the front surface 26a of the circuit board 26, and bonded so as to have a conductive connection to a large number of through-holes 26c formed in a peripheral portion of the circuit board 26 corresponding to the respective conductive wires 4. The circuit board 26 has a plurality of wiring patterns (not shown) for electrically connecting these conductive wires 4 and the associated pin terminals of the receptacle 25.

The circuit board 26 has a planar shape as in the following so that, in the internal space 9b, a cooling gas can smoothly circulate by convection without being interrupted by the circuit board 26. More specifically, the planar shape of the circuit board 26 viewed from the other end face 9c of the rear case 9 is a shape not including a region opposed to the inlet 9d and the outlet 9e formed in the other end face 9c. The description "not including a region opposed to the inlet 9d and the outlet 9e" means that, for example, when the circuit board 26 projects a shadow on the other end face 9c, the shadow of the circuit board 26 does not overlap the inlet 9d and the outlet 9e.

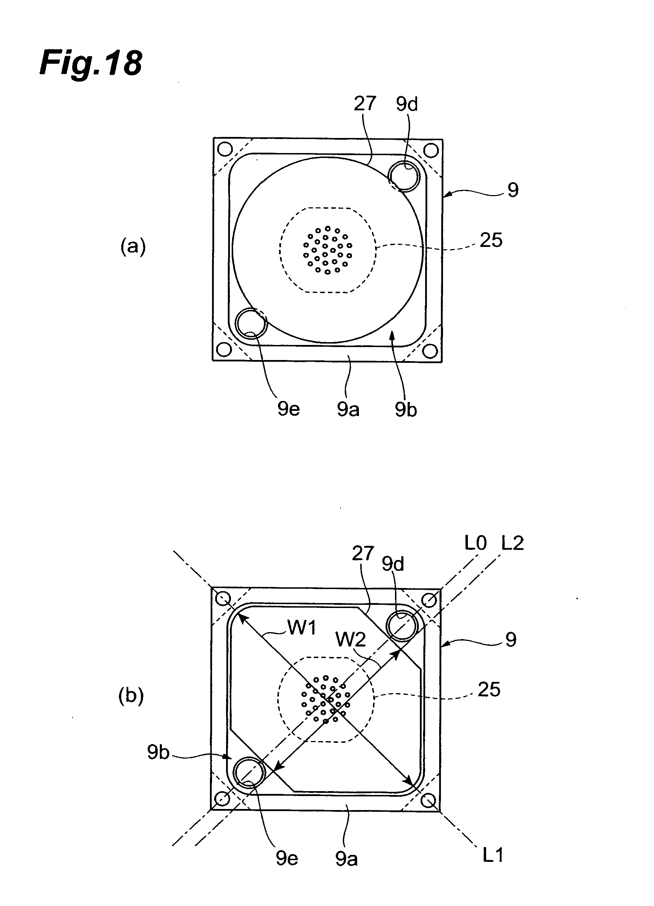

Specifically, the circuit board 26 of the present embodiment, as shown in the area (b) of Fig. 18, has a slender planar shape with the maximum width w1 and the minimum width w2. Moreover, in such a planar shape, a longitudinal direction defining the maximum width w1 and a lateral direction defining the minimum width w2 are orthogonal to each other. More specifically, the longitudinal direction defining the maximum width w1 of the circuit board 26 is coincident with one diagonal line L1 in the other end face 9c, and the lateral direction defining the minimum width w2 is arranged within the internal space 9b along a direction L0 (another diagonal line L2 in the other end face 9c) connecting the center of the inlet 9d and the center of the outlet 9e. Further, more concretely, the circuit board 26 has a substantially hexagonal planar shape for which a pair of corner portions of a board in a substantially rectangular shape similar to the other end face 9c of the rear case 9, more specifically, a pair of corner portions located in the separating direction of the inlet 9d and the outlet 9e have been linearly cut away.

The light source apparatus 1 having such a structure as in the above provides the following advantageous effects. More specifically, in this light source apparatus 1, a cooling gas is introduced from the inlet 9d formed in the rear surface 9c of the rear case 9 to the inside the internal space 9b of said rear case 9. The cooling gas introduced to the inside of the internal space 9b is blown to the rear surface 3e of the front case 3. Thereafter, the cooling gas circulates by convection within the internal space 9b while being discharged from the outlet 9e formed in the rear surface 9c of the rear case 9.

Here, inside of the internal space 9b of the rear case 9, which is defined by the rear case 9 and the front case 3, the circuit board 26 is arranged. This circuit board 26 serves a role of consolidating the power supply wiring separated into a plurality of conductive wirings 4 and connecting the same to the receptacle 25, but is arranged between the rear surface 9c of the rear case 9 and the front case 3 spaced from each other, and so that its front surface 26a and back surface 26b face the rear surface 3e of the front case 3 and the rear surface 9c of the rear case 9, respectively. Accordingly, the cooling gas introduced to the inside of the internal space 9b is stirred by the circuit board 26, and flows along the rear surface 3e of the front case 3, thus uniformly spreads all over the rear surface 3e of the front case 3. Therefore, by the light source apparatus 1 according to the present embodiment, not only the uniformity of the cooling effect on the light-emitting units 2, but also the uniformity of the cooling effect on the ultraviolet LEDs 10 can be improved, without separately adding a member.

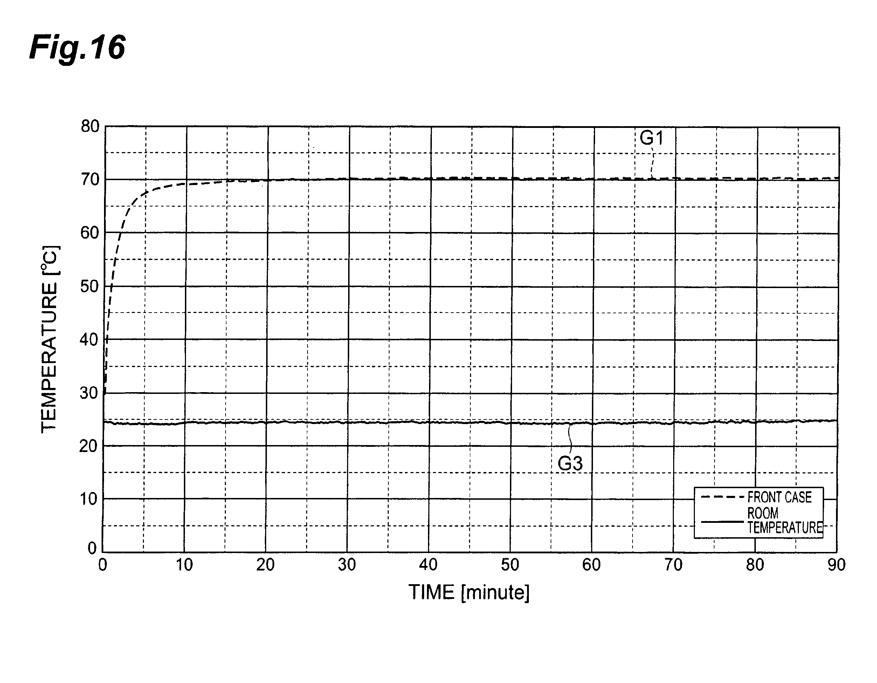

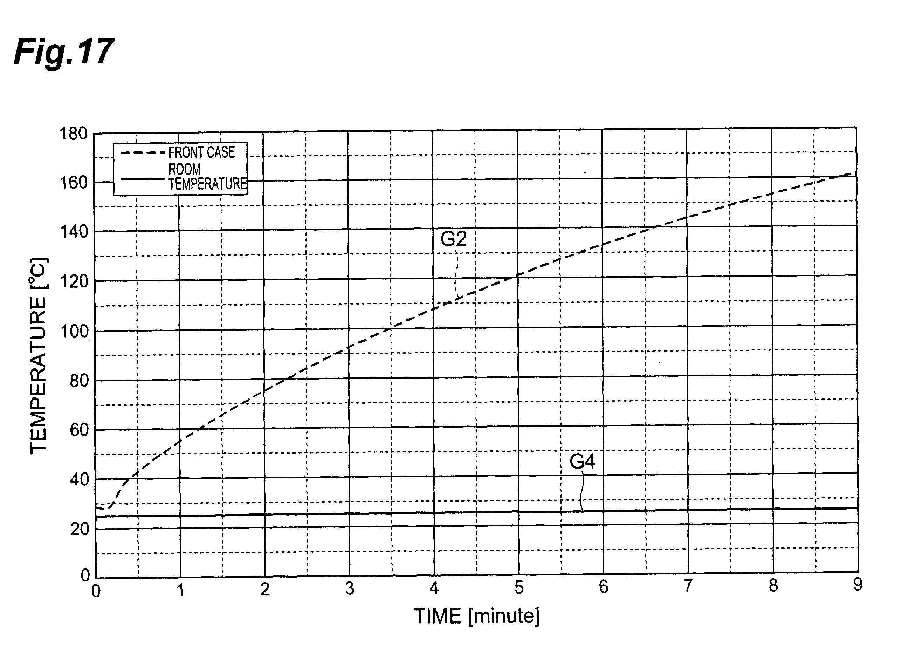

Here, Fig. 16 is a graph showing changes in the temperature of the front case 3 in the light source apparatus 1. Moreover, Fig. 17 is a graph showing changes in the temperature of the front case 3 when no air cooling is performed by way of comparison. In addition, graph G1 of Fig. 16 and graph G2 of Fig. 17 show changes in the temperature of side surfaces (surfaces 3c, 3d) of the front case 3, and graph G3 of Fig. 16 and graph G4 of Fig. 17 show changes in the temperature of the surroundings. Moreover, Fig. 16 shows a case of the cooling gas introduced to the rear case 9 at a pressure of 0.1 [MPa].

As shown in Fig. 16, it can be understood that, in the light source apparatus 1 according to the present embodiment, as a result of the cooling gas being introduced to the internal space 9b of the rear case 9, the temperature of the front case 3 can be stably maintained at a low temperature of nearly 70°C. In comparison, as shown in Fig. 17, the temperature of the front case 3 reaches a very high temperature in a short time when no air cooling is performed. Thus, by the light source apparatus 1 according to the present embodiment, the front case 3 can be effectively cooled.

Moreover, the planar shape of the circuit board 26 viewed from the rear surface 9c of the rear case 9 preferably does not include a region opposed to the inlet 9d and the outlet 9e. For example, as in the present embodiment, when the inlet 9d and the outlet 9e are formed in the rear surface 9c of the rear case 9 in a state mutually separated in a predetermined direction and the circuit board 26 is in a shape having a longitudinal direction and a lateral direction, it is preferable that the circuit board 26 is arranged so that the lateral direction extends along the above-described predetermined direction (direction that is coincident with a segment connecting the center of the inlet 9d and the center of the outlet 9e). Moreover, as in the present embodiment, when the rear surface 9c of the rear case 9 is in a rectangular shape, and the inlet 9d and the outlet 9e are formed separated in a diagonal direction of the rear surface 9c of the rear case 9, it is more preferable that the circuit board 26 has a planar shape for which corner portions in the diagonal direction of a rectangular-shaped board have been cut away. Since these structures allow the cooling gas to circulate by convection smoothly without being interrupted due to the existence of the circuit board 26, the cooling effect on the ultraviolet LEDs 10 can be further improved.

Moreover, as in the present embodiment, the circuit board 26 is preferably supported within the internal space 9b of the rear case 9 by a wiring connector (specifically, the receptacle 25 that forms a part of said wiring connector). In such a configuration, since it is not necessary to provide a member for supporting the circuit board 26 separately within said internal space 9b, the cooling gas can be smoothly circulated within said internal space 9b.

### (Modification)

Fig. 18 shows a front view (view from the front surface 9a side of the rear case 9) showing the arrangement between the rear case 9 and the circuit board 27 as a modification of the light source apparatus 1 according to the above-described embodiment. There is a difference between the present modification and the above-described embodiment in the planar shape of the circuit board. More specifically, the planar shape of the circuit board 27 of the present modification exhibits a substantially circular shape as shown in Fig. 18, and its diameter is slightly smaller than the width of the internal space 9b of the rear case 9.

The planar shape of the circuit board is not limited to the foregoing planar shapes, and various shapes can be adopted. Moreover, in the present modification, the planar shape of the circuit board 27 slightly overlaps with a region opposing to the inlet 9d and the outlet 9e, but by the light source apparatus according to the present invention, the same effects as those in the above-described embodiment are provided even when the inlet and outlet and the circuit board are in such an arrangement.

The light source apparatus according to the present invention is not limited to the foregoing embodiment and modification, and various other modifications can be made. For example, the ultraviolet LED was exemplified as an example of the semiconductor light-emitting element in the above-described embodiment, but various other elements such as LEDs of other wavelengths and laser elements can also be applied as the semiconductor light-emitting element in the present invention. Moreover, in the above-described embodiment, the shape of the second case (rear case 9) was a hollow shape having a substantially rectangle-shaped external appearance, but even in another shape such as, for example, a cylindrical shape, the above-mentioned advantageous effects are provided.

From the invention thus described, it will be obvious that the invention may be varied in many ways. Such variations are not to be regarded as a departure from the scope of the invention, and all such modifications as would be obvious to one skilled in the art are intended for inclusion within the scope of the following claims.

### Industrial Applicability

The light source apparatus according to the present invention can be applied to a spot light source and the like that is used in a variety of operations such as, for example, bonding of an optical communication component, bonding of an optical pick-up component, bonding of a magnetic head, bonding of a CCD, fixation of an electronic component, hardening of a fiber cladding, sealing of liquid crystals, fixation of a coil winding, drying of a UV ink, a UV exciting light source, and a high-intensity ultraviolet irradiation experiment.

### Description of the Reference Numerals

1 ... light source apparatus; 2 ... light-emitting unit; 3 ... front case; 4 ... conductive wire; 9 ... rear case; 9a ... one end face; 9b ... space; 9c ... the other end face; 9d ... inlet; 9e ... outlet; 9f ... connector insertion hole; 10 ... ultraviolet LED; 11 ... insertion hole; 12 ... lens hood; 15 ... nut; 17 ... heat conductor; 18 ... insulating substrate; 21, 22 ... pipe; 23 ... cable; 24 ... plug; 25 ... receptacle; and 26, 27 ... circuit board.

## Claims

1. A light source apparatus **characterized by** comprising:
a plurality of light-emitting elements (10);
a first case (3) storing each of the light-emitting elements (10);
a heat conducting structure (17) holding each of the light-emitting elements (10) at a predetermined position in the first case (3), and enabling heat transfer between each of the light-emitting elements (10) and the first case (3);
a plurality of conductive wires (4) provided corresponding to each of the light-emitting elements (10), each of the conductive wires (4) having one end electrically connected to the associated one of the light-emitting elements (10) and the other end led out of the first case (3);
a circuit board (26; 27) to which the other ends of the conductive wires (4) are electrically connected;
a second case (9) having an internal space (9b) storing the circuit board (26; 27), the second case (9) having an introduction opening for introducing the circuit board (26; 27) into the inner space (9b), and being fixed to the first case (3) so that the introduction opening is blocked by one surface (3e) of the first case (3);
an inlet (9d) for introducing a gas for cooling the first case (3) to the inside of the internal space (9b) of the second case (9), the inlet (9d) being provided in a predetermined region of the second case (9) excluding an opening end (9a) that defines the introduction opening; and
an outlet (9e) for discharging the gas introduced to the inside of the internal space (9b) of the second case (9), the outlet (9e) being provided in the predetermined region of the second case (9) excluding an opening end (9a) that defines the introduction opening.

2. The light source apparatus according to claim 1, wherein the first case (3) has a plurality of through-holes (11) each corresponding to one of the light-emitting elements (10) and arranged mutually separated by a predetermined distance, the through-holes (11) storing, in a space defined by an inner wall of each of which, the associated one of the light-emitting elements (10).

3. The light source apparatus according to claim 1 or 2, wherein the first case (3) is comprised of a metal material.

4. The light source apparatus according to claim 1 or 2, wherein the heat conducting structure (17) includes a plurality of heat conductors provided corresponding to the light-emitting elements (10).

5. The light source apparatus according to claim 1 or 2, further comprising a holding structure (24; 25) for holding the circuit board (26; 27) in a state separated by a predetermined distance from the one surface (3e) of the first case (3) and an inner wall surface of the second case (9) that define the internal space (9b) of the second case (9).

6. The light source apparatus according to claim 1 or 2, wherein the inlet (9d) and the outlet (9e) are arranged on one surface (9c) of the second case (9) opposed to an opening end (9a) defining the introduction opening, and
wherein, when the one surface (9c) of the second case (9) is viewed along a direction from the one surface (9c) of the second case (9) toward the one surface (3e) of the first case (3), the circuit board (26; 27) has a shape not overlapping the inlet (9d) and the outlet (9e).

7. The light source apparatus according to claim 1 or 2, wherein the inlet (9d) and the outlet (9e) are arranged on one surface (9c) of the second case (9) opposed to an opening end (9a) defining the introduction opening, and
wherein, when the one surface (9c) of the second case (9) is viewed along a direction from the one surface (9c) of the second case (9) toward the one surface (3e) of the first case (3), the inlet (9d) and the outlet (9e) are arranged at positions separated on the one surface (9c) of the second case (9), and the circuit board (26; 27) is arranged so that a segment indicating a minimum width of the circuit board (26; 27) becomes coincident or parallel with a straight line passing through a center of the inlet (9d) and a center of the outlet (9e).

8. The light source apparatus according to claim 1 or 2, wherein the inlet (9d) and the outlet (9e) are arranged on one surface (9c) of the second case (9) opposed to an opening end (9a) defining the introduction opening, and
wherein, when the one surface (9c) of the second case (9) is viewed along a direction from the one surface (9c) of the second case (9) toward the one surface (3e) of the first case (3), the one surface (9c) of the second case (9) has a rectangular shape, the inlet (9d) and the outlet (9e) are provided separated in a diagonal direction of the one surface (9c) of the second case (9), and the circuit board (26; 27) has a planar shape that is similar to the one surface (9c) of the second case (9), and for which corner portions in the diagonal direction where the inlet (9d) and the outlet (9e) are located have been cut away.

9. The light source apparatus according to claim 1 or 2, further comprising a wiring connector (24; 25) to be attached to one surface (9c) of the second case (9) opposed to an opening end (9a) defining the introduction opening,
wherein the circuit board (26; 27) is supported in the internal space (9b) of the second case (9) by the wiring connector (24; 25).

## Patentansprüche

1. Lichtquellenvorrichtung, **dadurch gekennzeichnet, dass** sie umfasst:
eine Vielzahl lichtemittierender Elemente (10);
ein erstes Gehäuse (3), in dem jedes der lichtemittierenden Elemente (10) aufgenommen ist;
eine wärmeleitende Struktur (17), die jedes der lichtemittierenden Elemente (10) an einer vorgegebenen Position in dem ersten Gehäuse (3) hält und Wärmeübertragung zwischen jedem der lichtemittierenden Elemente (10) und dem ersten Gehäuse (3) ermöglicht;
eine Vielzahl leitender Drähte (4), die entsprechend jedem der lichtemittierenden Elemente (10) vorhanden sind, wobei ein Ende jedes der leitenden Drähte (4) elektrisch mit dem dazugehörigen der lichtemittierenden Elemente (10) verbunden ist und das andere Ende aus dem ersten Gehäuse (3) herausgeführt wird;
eine Leiterplatte (26; 27), mit der die anderen Enden der leitenden Drähte (4) elektrisch verbunden sind;
ein zweites Gehäuse (9) mit einem Innenraum (9b), in dem die Leiterplatte (26; 27) aufgenommen ist, wobei das zweite Gehäuse (9) eine Einleitöffnung zum Einleiten der Leiterplatte (26; 27) in den Innenraum (9b) aufweist und es an dem ersten Gehäuse (3) so befestigt ist, dass die Einleitöffnung durch eine Fläche (3e) des ersten Gehäuses (3) blockiert wird;
einen Einlass (9d) zum Einleiten eines Gases zum Kühlen des ersten Gehäuses (3) in das Innere des Innenraums (9b) des zweiten Gehäuses (9), wobei der Einlass (9d) in einem vorgegebenen Bereich des zweiten Gehäuses (9) mit Ausnahme eines Öffnungsendes (9a) vorhanden ist, das die Einleitöffnung bildet; und
einen Auslass (9e) zum Ableiten des in das Innere des Innenraums (9b) des zweiten Gehäuses (9) eingeleiteten Gases, wobei der Auslass (9e) in dem vorgegebenen Bereich des zweiten Gehäuses (9) mit Ausnahme eines Öffnungsendes (9a) vorhanden ist, das die Einleitöffnung bildet.

2. Lichtquellenvorrichtung nach Anspruch 1, wobei das erste Gehäuse (3) eine Vielzahl von Durchgangslöchern (11) hat, die jeweils einem der lichtemittierenden Elemente (10) entsprechen und um einen vorgegebenen Abstand voneinander getrennt angeordnet sind, und die Durchgangslöcher in einem Raum, der durch eine Innenwand jedes derselben gebildet wird, das dazugehörige der lichtemittierenden Elemente (10) aufnehmen.

3. Lichtquellenvorrichtung nach Anspruch 1 oder 2, wobei das erste Gehäuse (3) aus einem Metallmaterial besteht.

4. Lichtquellenvorrichtung nach Anspruch 1 oder 2, wobei die wärmeleitende Struktur (17) eine Vielzahl von Wärmeleitern enthält, die entsprechend den lichtemittierenden Elementen (10) vorhanden sind.

5. Lichtquellenvorrichtung nach Anspruch 1 oder 2, die des Weiteren eine Haltestruktur (24; 25) umfasst, mit der die Leiterplatte (26; 27) in einem Zustand gehalten wird, in dem sie um einen vorgegebenen Abstand von der einen Fläche (3e) des ersten Gehäuses (3) und einer Innenwandfläche des zweiten Gehäuses (9) getrennt ist, die den Innenraum (9b) des zweiten Gehäuses (9) bilden.

6. Lichtquellenvorrichtung nach Anspruch 1 oder 2, wobei der Einlass (9d) und der Auslass (9e) an einer Fläche (9c) des zweiten Gehäuses (9) angeordnet sind, die einem Öffnungsende (9a) gegenüberliegt, das die Einleitöffnung bildet, und
wobei, wenn die eine Fläche (9c) des zweiten Gehäuses (9) entlang einer Richtung von der einen Fläche (9c) des zweiten Gehäuses (9) zu der einen Fläche (3e) des ersten Gehäuses (3) hin betrachtet wird, die Leiterplatte (26; 27) eine Form hat, die den Einlass (9d) und den Auslass (9e) nicht überlappt.

7. Lichtquellenvorrichtung nach Anspruch 1 oder 2, wobei der Einlass (9d) und der Auslass (9e) an einer Fläche (9c) des zweiten Gehäuses (9) angeordnet sind, die einem Öffnungsende (9a) gegenüberliegt, das die Einleitöffnung bildet, und
wobei, wenn die eine Fläche (9c) des zweiten Gehäuses (9) entlang einer Richtung von der einen Fläche (9c) des zweiten Gehäuses (9) zu der einen Fläche (3e) des ersten Gehäuses (3) hin betrachtet wird, der Einlass (9d) und der Auslass (9e) an Positionen angeordnet sind, die an der einen Fläche (9c) des zweiten Gehäuses (9) getrennt sind, und die Leiterplatte (26; 27) so angeordnet ist, dass ein Segment, das eine minimale Breite der Leiterplatte (26; 27) angibt, deckungsgleich mit oder parallel zu einer geraden Linie ist, die durch eine Mitte des Einlasses (9d) und eine Mitte des Auslasses (9e) hindurch verläuft.

8. Lichtquellenvorrichtung nach Anspruch 1 oder 2, wobei der Einlass (9d) und der Auslass (9e) an einer Fläche (9c) des zweiten Gehäuses (9) angeordnet sind, die einem Öffnungsende (9a) gegenüberliegt, das die Einleitöffnung bildet, und
wobei, wenn die eine Fläche (9c) des zweiten Gehäuses (9) entlang einer Richtung von der einen Fläche (9c) des zweiten Gehäuses (9) zu der einen Fläche (3e) des ersten Gehäuses (3) hin betrachtet wird, die eine Fläche (9c) des zweiten Gehäuses (9) eine recheckige Form hat, der Einlass (9d) und der Auslass (9e) in einer diagonalen Richtung der einen Fläche (9c) des zweiten Gehäuses (9) getrennt vorhanden sind und die Leiterplatte (26; 27) eine plane Form hat, die der einen Fläche (9c) des zweiten Gehäuses (9) gleicht und deren Eckenabschnitte in der diagonalen Richtung, an denen sich der Einlass (9d) und der Auslass (9e) befinden, abgeschnitten worden sind.

9. Lichtquellenvorrichtung nach Anspruch 1 oder 2, die des Weiteren einen Verdrahtungsverbinder (24; 25) umfasst, der an einer Fläche (9c) des zweiten Gehäuses (9) angebracht wird, die einem Öffnungsende (9a) gegenüberliegt, das die Einleitöffnung bildet,
wobei die Leiterplatte (26; 27) in dem Innenraum (9b) des zweiten Gehäuses (9) von dem Verdrahtungsverbinder (24; 25) getragen wird.

## Revendications

1. Appareil de source lumineuse **caractérisé en ce qu**'il comprend :
- une pluralité d'éléments lumineux (10) ;
- un premier boitier (3) logeant chacun des éléments lumineux (10) ;
- une structure conductrice de chaleur (17) maintenant chacun des éléments lumineux (10) à une position prédéterminée dans le premier boitier (3) et permettant un transfert de chaleur entre chacun des éléments lumineux (10) et le premier boitier (3) ;
- une pluralité de fils conducteurs (4) prévus pour correspondre à chacun des éléments lumineux (10), chacun des fils conducteurs (4) ayant une extrémité reliée électriquement à l'élément associé parmi les éléments lumineux (10) et l'autre extrémité amenée à l'extérieur du premier boitier (3) ;
- une carte de circuit imprimé (26 ; 27) à laquelle les autres extrémités des fils conducteurs (4) sont électriquement connectées ;
- un second boitier (9) ayant un espace interne (9b) logeant la carte de circuit imprimé (26 ; 27), le second boitier (9) ayant une ouverture d'introduction pour introduire la carte de circuit imprimé (26 ; 27) dans l'espace intérieur (9b) et étant fixé au premier boitier (3) de sorte que l'ouverture d'introduction soit bloquée par une surface (3a) du premier boitier (3) ;
- une entrée (9d) pour introduire un gaz pour refroidir le premier boitier (3) à l'intérieur de l'espace interne (9b) du second boitier (9), l'entrée (9d) étant disposée dans une région prédéterminée du second boitier (9) à l'exclusion d'une extrémité d'ouverture (9a) qui définit l'ouverture d'introduction ; et
- une sortie (9e) pour évacuer le gaz introduit à l'intérieur de l'espace interne (9b) du second boitier (9), la sortie (9e) étant disposée dans la région prédéterminée du second boitier (9) à l'exclusion d'une extrémité d'ouverture (9a) qui définit l'ouverture d'introduction.

2. Appareil de source lumineuse selon la revendication 1, dans lequel le premier boitier (3) comporte une pluralité de trous traversant (11), chacun correspondant à un des éléments lumineux (10) et agencés séparés mutuellement par une distance prédéterminée, chaque trou traversant (11) logeant, dans un espace défini par sa paroi intérieure, l'élément associé parmi les éléments lumineux (10).

3. Appareil de source lumineuse selon les revendications 1 ou 2, dans lequel le premier boitier (3) est constitué en un matériau métallique.

4. Appareil de source lumineuse selon les revendications 1 ou 2, dans lequel la structure conductrice de chaleur (17) comprend une pluralité de conducteurs de chaleur prévus pour correspondre aux élément lumineux (10).

5. Appareil de source lumineuse selon les revendications 1 ou 2, comprenant en outre une structure de maintien (24 ; 25) pour maintenir la carte de circuit imprimé (26 ; 27) dans un état séparé par une distance prédéterminée d'une première surface (3e) du premier boitier (3) et d'une surface de la paroi intérieure du
second boitier (9) qui définit l'espace interne (9b) du second boitier (9).

6. Appareil de source lumineuse selon les revendications 1 ou 2, dans lequel l'entrée (9d) et la sortie (9e) sont agencées sur une première surface (9c) du second boitier (9) opposée à une extrémité d'ouverture (9a) définissant l'ouverture d'introduction, et
- dans lequel, lorsque la première surface (9c) du second boitier (9) est vue suivant la direction de la première surface (9c) du second boitier (9) vers la première surface (3e) du premier boitier (3), la carte de circuit imprimé (26 ; 27) a une forme qui ne recouvre pas l'entrée (9d) et la sortie (9e).

7. Appareil de source lumineuse selon les revendications 1 ou 2, dans lequel l'entrée (9d) et la sortie (9e) sont agencées sur une première surface (9c) du second boitier (9) opposée à une extrémité d'ouverture (9a) définissant l'ouverture d'introduction, et
- dans lequel, lorsque la première surface (9c) du second boitier (9) est vue suivant la direction de la première surface (9c) du second boitier (9) vers la première surface (3e) du premier boitier (3), l'entrée (9d) et la sortie (9e) sont agencées à des positions séparées sur la première surface (9c) du second boitier (9) et la carte de circuit imprimé (26 ; 27) est agencée de sorte qu'un segment indiquant une largeur minimale de la carte de circuit imprimé (26 ; 27) devienne coïncident avec, ou parallèle à, une ligne droite traversant le centre de l'entrée (9d) et le centre de la sortie (9e).

8. Appareil de source lumineuse selon les revendications 1 ou 2, dans lequel l'entrée (9d) et la sortie (9e) sont agencées sur une première surface (9c) du second boitier (9) opposée à une extrémité d'ouverture (9a) définissant l'ouverture d'introduction, et
- dans lequel, lorsque la première surface (9c) du second boitier (9) est vue suivant la direction de la première surface (9c) du second boitier (9) vers la première surface (3e) du premier boitier (3), la première surface (9c) du second boitier (9) a une forme rectangulaire, l'entrée (9d) et la sortie (9e) sont disposées séparées dans une direction diagonale de la première surface (9c) du second boitier (9) et la carte de circuit imprimé (26 ; 27) a une forme plane qui est similaire à la première surface (9c) du second boitier (9) et pour laquelle des parties de coins dans la direction diagonale, où l'entrée (9d) et la sortie (9e) sont situées, ont été enlevées par découpe.

9. Appareil de source lumineuse selon les revendications 1 ou 2, comprenant en outre un connecteur de câblage (24 ; 25) destiné à être fixé à la première surface (9c) du second boitier (9) opposée à une extrémité d'ouverture (9a) définissant l'ouverture d'introduction, et
- dans lequel la carte de circuit imprimé (26 ; 27) est soutenue dans l'espace interne (9b) du second boitier (9) par le connecteur de câblage (24 ; 25).
